# EUROPÄISCHE PATENTSCHRIFT

(11) **EP 0 914 993 B1**
(45) Veröffentlichungstag und Bekanntmachung des Hinweises auf die Patenterteilung: **12.12.2001**
(21) Anmeldenummer: 98120162.7
(22) Anmeldetag: 28.10.1998
(51) Int. Cl.: B60R 21/20, B60R 21/26

(54) **Vorrichtung zum Aufblasen eines Gassacks**
Device for inflating an air bag
Dispositif pour gonfler un air bag

(30) Priorität: 07.11.1997 DE 29719783 U
(43) Veröffentlichungstag der Anmeldung: 12.05.1999
(73) Patentinhaber: TRW Automotive Safety Systems GmbH & Co. KG, 63743 Aschaffenburg (DE)
(72) Erfinder: Braunschädel, Axel, 63773 Goldbach (DE)
(74) Vertreter: Degwert, Hartmut, Dipl.-Phys.

(56) Entgegenhaltungen:
- EP-A- 0 451 731
- WO-A-97/34785
- DE-A- 19 631 739
- ANONYMOUS: "DUAL STAGE HYBRID AIR BAG INFLATOR" RESEARCH DISCLOSURE., Bd. 391, Nr. 035, 10. November 1996, Seiten 743-745, XP000680933 HAVANT GB

## Beschreibung

Die Erfindung betrifft eine Vorrichtung zum raschen Aufblasen eines Gassacks.

Eine solche Vorrichtung ist schon bekannt aus ANONYMOUS : 'DUAL STAGE HYBRID AIR BAG INFLATOR' RESEARCH DISCLOSURE., Bd 391, Nr 035, 10. November 1996, Seiten 743-745, XP 000680933 HAVANT GB.

Vorrichtungen mit einem rasch aufblasbaren Gassack werden in großem Umfang bei Kraftfahrzeugen eingesetzt, um die Insassen gegen ein Aufprallen auf Karosserieteile zu schützen, wenn das Fahrzeug bei einem Unfall von außen einwirkenden Kräften ausgesetzt ist, die erhebliche Geschwindigkeitsänderungen, insbesondere negative Beschleunigungen in Fahrtrichtung bewirken. Dabei lösen entsprechend ausgelegte Sensoren ein Signal aus, das zur Zündung eines Treibsatzes führt, dessen gasförmige Verbrennungsprodukte einen Gassack rasch, d.h. innerhalb von 10 bis 30 Millisekunden, aufblasen. Alternativ kann ein Druckgasspeicher geöffnet werden oder aber es kann ein Füllgasgemisch aus einem Druckgasspeicher und aus den Verbrennungsprodukten eines Treibsatzes zur Verfügung gestellt werden. In allen Fällen dient der aufgeblasene Gassack als ein im Idealfall plastisch verformbarer Puffer, der den relativ zur Karosserie beschleunigten Körper der Fahrzeuginsassen auffängt und vor Verletzungen schützt.

Bei der Auslegung derartiger Vorrichtungen muß man ein bestimmtes Gassackvolumen wählen, mit dem selbstverständlich nicht alle Unfallsituationen optimal abdeckbar sind. Ein bestimmtes Gassackvolumen kann auch im Hinblick auf die mindestens im Bereich von 50 bis 100 kg liegenden unterschiedlichen Gewichte der Kraftfahrzeuginsassen nur ein Kompromiß sein, obwohl man neuderdings schon versucht, durch eine selbsttätige Regelung des Aufblasverhaltens insoweit eine bessere Anpassung zu erreichen.

Auch auf das Aufblasverhalten kann man bei der Auslegung Einfluß nehmen. So müssen beispielsweise Seitenairbags wegen der kurzen Reaktionswege wesentlich schneller gefüllt werden als Frontairbags. Durch Bemessung der Treibladungsmenge, des Druckgasvolumens und der Drosselquerschnitte im Einströmbereich kann man das Aufblasen zwar schon in gewissen Grenzen steuern, nicht aber eine optimale Anpassung erreichen, weil einerseits das Auslösesignal zwangsläufig nur eine einfache, auf einen bestimmten Grenzwert abgestimmte Entscheidung zuläßt und weil andererseits der Druckverlauf in der Aufblasphase nicht beliebig einstellbar ist, da insoweit noch eine Reihe anderer Parameter berücksichtigt werden müssen.

Man hat daher schon vorgeschlagen, einem Gassack zwei oder mehr Treibsätze zuzuordnen, die entweder zeitlich versetzt gezündet werden, um einen bestimmten Druckverlauf zu erreichen, oder die in Abhängigkeit von zwei oder mehr gestaffelten Auslöse-Grenzwerten einzeln oder gemeinsam gezündet werden, um unterschiedliche Aufblasvolumina zu realisieren.

Für beide Alternativen muß man die Treibsätze getrennt voneinander unterbringen, damit eine gegenseitige Beeinflussung ausgeschlossen werden kann. Andererseits müssen die gasförmigen Verbrennungsprodukte aus den Treibsätzen dem Gassack zuführbar sein, wozu aus Platz- und Kostengründen in der Regel keine völlig voneinander getrennten Strömungswege vorgesehen werden können.

Durch die Erfindung wird mit einfachen Mitteln sichergestellt, daß der zweite Treibsatz bei einer Zündung des ersten Treibsatzes unbeeinflußt bleibt und insbesondere nicht der dabei entstehenden Druckwelle ausgesetzt ist und daß bei einer Zündung des zweiten Treibsatzes ein Strömungsweg bereitgestellt wird, über den die gasförmigen Verbrennungsprodukte des zweiten Treibsatzes in den Gassack abfließen können.

Gemäß der Erfindung enthält die Vorrichtung zum raschen Aufblasen eines Gassacks einen Druckgasbehälter, dessen Auslaßöffnung von einer absprengbaren Verschlußscheibe verschlossen ist, ein Zwischengehäuse, in dem das auslaßseitige Ende des Druckgasbehälters angeordnet ist und dessen Innenraum mittels der Verschlußscheibe in einen Druckraum mit Einlaßöffnungen für die gasförmigen Verbrennungsprodukte eines Treibsatzes und einen Abströmraum mit Auslaßöffnungen für ein Gasgemisch zum Füllen des Gassacks unterteilt ist und ein Gehäuse für zwei getrennt anzuordnende Treibsätze, das das Zwischengehäuse umgibt und mit korrespondierend zu den Einlaß- und Auslaßöffnungen des Zwischengehäuses angeordneten Kanälen ausgestattet ist, durch die die gasförmigen Verbrennungsprodukte der Treibsätze in den Druckraum und zusammen mit dem Druckgas durch den Abströmraum in den Gassack strömen können.

Erfindungsgemäß ist ein Aufnahmeraum für den ersten Treibsatz über einen offenen Kanal direkt mit dem Druckraum verbunden, und der Kanal zwischen dem Aufnahmeraum für den zweiten Treibsatz und dem Druckraum ist durch ein Schließteil abgesperrt, das von dem bei der Zündung des zweiten Treibsatzes entstehenden Druck, vorzugsweise gegen eine elastische Spannkraft, in eine Öffnungsstellung bewegbar ist.

Dabei ist es wichtig, daß das Schließteil so ausgebildet und angeordnet ist, daß die Druckwelle bei einer Zündung des ersten Treibsatzes durch umgebende Gehäusebauteile abgefangen wird, ohne daß auf das Schließteil Kräfte wirken, die es in die Öffnungsstellung bewegen könnten. Andererseits ist das Schließteil so auszubilden und anzuordnen, daß es bei einer Zündung des zweiten Treibsatzes ohne weiteres in Richtung Öffnungsstellung bewegt werden kann, damit das Abströmen der gasförmigen Verbrennungsprodukte des zweiten Treibsatzes nicht unnötig verzögert wird.

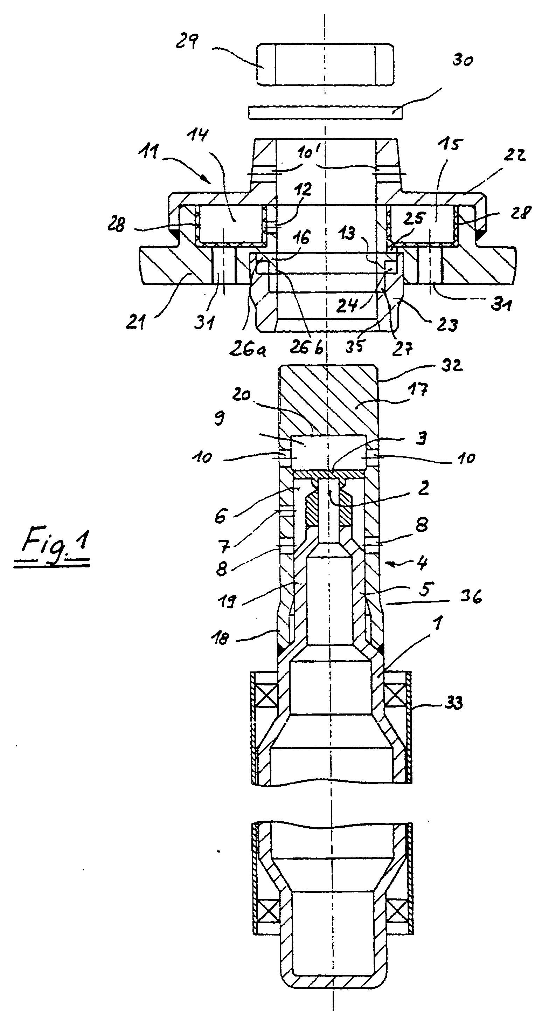

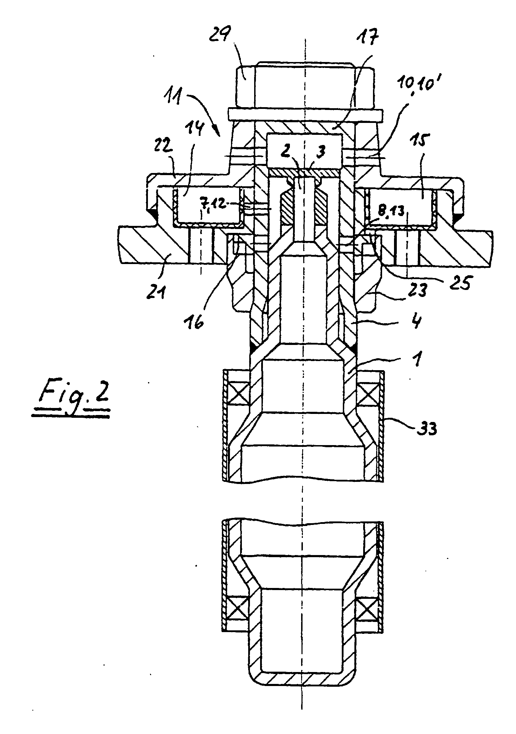

Vorteilhafte und zweckmäßige Ausgestaltungen des Erfindungsgedankens sind in den Unteransprüchen 2 bis 13 beschrieben. Die Unteransprüche 14 und 15 beziehen sich auf die Verwendung der erfindungsgemäßen Vorrichtung in Verbindung einem Kraftfahrzeuglenkrad. Weitere Einzelheiten werden anhand des in den Figuren 1 und 2 dargestellten Ausführungsbeispiels näher erläutert. Es zeigen:
- Figur 1 eine Ausführungsform des Erfindungsgedankens als Explosionsdarstellung im Schnitt,
- Figur 2 die Ausführungsform gemäß Figur 1 in zusammengesetztem Zustand.

Die in den Figuren 1 und 2 dargestellte Ausführungsform des Erfindungsgedankens ist für eine Verwendung in Verbindung mit einem Kraftfahrzeuglenkrad konzipiert. Der rohrförmige Druckgasbehälter 1 dient dabei gleichzeitig als Lenksäule, die in an sich bekannter Weise in einem Lenkrohr 33 drehbar gelagert ist. Der Druckgasbehälter 1 ist an seinem auslaßseitigen Ende 5 im Durchmesser zweifach abgesetzt ausgebildet, wobei ein Führungsbereich 19 mit größerem Durchmesser und ein die Auslaßöffnung 2 umgebender Bereich mit kleinerem Durchmesser vorgesehen ist und wobei die Auslaßöffnung 2 mittels einer absprengbaren Verschlußscheibe 3 verschlossen ist, die einen Außendurchmesser aufweist, der mit dem Durchmesser des Führungsbereiches 19 übereinstimmt. Auf das auslaßseitige Ende 5 des Druckgasbehälters 1 ist ein Zwischengehäuse 4 aufgesteckt, und mit seinem offenen Ende 18 am Druckgasbehälter 1 befestigt. Das Zwischengehäuse 4 ist als ein endseitig geschlossenes Rohrteil 17 ausgebildet und weist Einlaßöffnungen 7 und 8 für die gasförmigen Verbrennungsprodukte sowie Auslaßöffnungen 10 für ein Gasgemisch zum Füllen des Gassacks auf. Zwischen dem auslaßseitigen Ende 5 des Druckgasbehälters 1 mit kleinerem Durchmesser und der Innenwandung des Rohrteils 17 ist ein Druckraum 6 ausgebildet, der in axialer Richtung von der Verschlußscheibe 3 begrenzt wird. In diesen Druckraum münden die Einlaßöffnungen 7 und 8. Zwischen dem geschlossenen Ende 20 des Rohrteils 17 und der Verschlußscheibe 3 ist ein Abströmraum 9 mit radial angeordneten Auslaßöffnungen 10 vorgesehen. Am geschlossenen Ende des Rohrteils 17 ist außen ein Schraubgewinde 32 angebracht.

Das Gehäuse 11 mit den Aufnahmeräumen 14 und 15 für die Treibsätze umfaßt ein Bodenteil 21, ein Deckelteil 22 und einen zylindrischen Einsatz 23, wobei alle genannten Teile 21, 22, 23 einen auf den Außendurchmesser des Rohrteils 17 abgestimmten Innendurchmesser aufweisen. Im Gehäuse 11 sind korrespondierend zu den Einlaßöffnungen 7 und 8 sowie zu den Auslaßöffnungen 10 Kanäle 12, 13 und 10' vorgesehen. Der Kanal 12 führt vom Aufnahmeraum 14 für den ersten Treibsatz radial nach innen, während der Kanal 13 als umlaufender Ringkanal 24 ausgebildet ist, in dem das Schließteil 16, das einen radialen Teil 26a und einen axialen Teil 26b aufweist, angeordnet ist. Das Verschließteil 16 verschließt eine axiale Durchgangsbohrung 25, die vom Aufnahmeraum 15 für den zweiten Treibsatz zum Ringkanal 13 bzw. 24 führt. Im zylindrischen Einsatz 23 ist in axialer Verlängerung des Ringkanals 24 noch ein Ringraum 27 ausgebildet, der zur Führung und Aufnahme des Schließteils 16 dient, wenn der zweite Treibsatz gezündet wird und über die Durchgangsbohrung 25 axialer Druck auf das Schließteil 16 ausgeübt wird. Die Aufnahmeräume 14 und 15 sind mit Siebeinsätzen 28 zur Rückhaltung fester Verbrennungsprodukte bzw. unverbrannter Treibladungsteile ausgestattet und mit Durchgangsbohrungen 31 im Bodenteil 21 des Gehäuses 11 für die Halterung von Zündern ausgestattet. Dabei kann das Bodenteil 21 als gesondertes Bauteil ausgeführt und mit dem Nabenbereich eines Lenkrades verbunden sein oder es kann selbst einen Teil der Lenkradnabe bilden, an den sich die Speichen anschließen.

Zur Montage der in Figur 1 getrennt dargestellten Bauteile wird das Gehäuse 11 auf das Rohrteil 17 aufgeschoben, das selbst fest mit dem als Lenksäule ausgebildeten Druckgasbehälter 1 verbunden ist. Mit dem Gehäuse 11 wird gleichzeitig das Lenkrad montiert. Anschließend wird auf das Gehäuse 11 eine Scheibe 30 aufgelegt und dann eine Mutter 29 auf das Außengewinde 32 des Rohrteils 17 aufgeschraubt. Die Endposition des Gehäuses 11 relativ zum Rohrteil 17 wird in an sich bekannter Weise durch konische Anschlagflächen 35 und 36 definiert.

Die Funktionsweise der erfindungsgemäßen Vorrichtung wird anhand der zusammengebauten Darstellung gemäß Figur 2 erläutert. Bei einer Zündung des im Aufnahmeraum 14 angeordneten ersten Treibsatzes entsteht eine Druckwelle, durch die die Verschlußscheibe 3 vom Druckgasbehälter 1 abgesprengt und gegen das geschlossene Ende des Rohrteils 17 geschleudert wird, so daß das Druckgas durch die Auslaßöffnung 2 ausströmen und zusammen mit den gasförmigen Verbrennungsprodukten des ersten Treibsatzes durch die Auslaßöffnung 10 bzw. den Kanal 10' in den nicht dargestellten Gassack abströmen kann.

Das Schließteil 16 kann dabei über die Einlaßöffnung 8 und den ringförmigen Kanal 13 nur in radialer Richtung beaufschlagt werden, wobei die Druckkräfte direkt auf den zylindrischen Einsatz 23 abgeleitet werden, ohne daß das Schließteil axialen Kräften unterliegt. Die Verbindung zum Aufnahmeraum 15 für den zweiten Treibsatz kann daher dauerhaft, zumindest aber bis zur Zündung des zweiten Treibsatzes abgesperrt bleiben. Wird der zweite Treibsatz gezündet, entsteht eine Druckwelle, die über die Durchgangsbohrung 25 axial auf das Schließteil 16 wirkt, das nunmehr in seine Öffnungsstellung bewegt wird und damit den Strömungsweg über den ringförmigen Kanal 13 und die Einlaßöffnungen 8 freigibt.

Damit ist eine Vorrichtung geschaffen, bei der zwei Treibsätze unabhängig voneinander gezündet werden können. Auf diese Weise ist sowohl der Anwendungsfall abgedeckt, bei dem der zweite Treibsatz zur Ausbildung eines bestimmten Druckverlaufs in zeitlichem Abstand nach dem ersten Treibsatz gezündet werden soll, wie auch der Anwendungsfall, bei dem entweder nur der erste oder beide Treibsätze in Abhängigkeit von der Größe der äußeren einwirkenden Kraft bei einem Unfall ansprechen sollen.

Der Erfindungsgedanke ist sinngemäß auch auf solche Vorrichtungen anwendbar, bei denen mehr als zwei Treibsätze einem Gassack zugeordnet sind, wobei selbstverständlich ein konstruktiver Mehraufwand in Kauf genommen werden muß, die oben erläuterten konstruktiven Grundsätze aber ohne weiteres anwendbar sind.

## Patentansprüche

1. Vorrichtung zum raschen Aufblasen eines Gassacks mit
- einem Druckgasbehälter (1), dessen Auslaßöffnung (2) von einer absprengbaren Verschlußscheibe (3) verschlossen ist,
- einem Zwischengehäuse (4), in dem das auslaßseitige Ende (5) des Druckgasbehälters (1) angeordnet ist und dessen Innenraum mittels der Verschlußscheibe (3) in einen Druckraum (6) mit Einlaßöffnungen (7, 8) für die gasförmigen Verbrennungsprodukte eines Treibsatzes und einen Abströmraum (9) mit Auslaßöffnungen (10) für ein Gasgemisch zum Füllen des Gassacks unterteilt ist, und
- einem Gehäuse (11) für zwei getrennt anzuordnende Treibsätze, das das Zwischengehäuse (4) umgibt und mit korrespondierend zu den Einlaß- und Auslaßöffnungen (7, 8, 10) des Zwischengehäuses (4) angeordneten Kanälen (12, 13, 10') ausgestattet ist, durch die die gasförmigen Verbrennungsprodukte der Treibsätze in den Druckraum (6) und zusammen mit dem Druckgas durch den Abströmraum (9) in den Gassack strömen können,
**dadurch gekennzeichnet, daß** ein Aufnahmeraum (14) für den ersten Treibsatz über einen offenen Kanal (12) direkt mit dem Druckraum (6) verbunden ist und daß der Kanal (13) zwischen dem Aufnahmeraum (15) für den zweiten Treibsatz und dem Druckraum durch ein Schließteil (16) abgesperrt ist, das von dem bei der Zündung des zweiten Treibsatzes entstehenden Druck in eine Öffnungsstellung bewegbar ist.

2. Vorrichtung nach Anspruch 1, **dadurch gekennzeichnet, daß** der Druckgasbehälter (1) rohrförmig mit einem verjüngten auslaßseitigen Ende (5) und einer zentralen, axialen Auslaßöffnung (2) ausgebildet ist, die von der absprengbaren Verschlußscheibe (3) verschlossen ist; deren Durchmesser größer ist als der Durchmesser des die Auslaßöffnung (2) umgebenden, verjüngten, auslaßseitigen Endes (5) des Druckgasbehälters (1).

3. Vorrichtung nach Anspruch 2, **dadurch gekennzeichnet, daß** das Zwischengehäuse (4) als endseitig geschlossenes Rohrteil (17) ausgebildet ist, dessen offenes Ende (18) auf einen am Druckgasbehälter (1) ausgebildeten, im Durchmesser verjüngten Führungsbereich (19) aufgesteckt und mit dem Druckgasbehälter (1) verbunden ist.

4. Vorrichtung nach Anspruch 3, **dadurch gekennzeichnet, daß** die Verschlußscheibe (3) den gleichen Durchmesser hat wie der Führungsbereich (19) des Druckgasbehälters (1).

5. Vorrichtung nach einem der Ansprüche 1 bis 4, **dadurch gekennzeichnet, daß** der Druckraum (6) zwischen dem gegenüber dem Führungsbereich (19) im Durchmesser weiter verjüngten auslaßseitigen Ende (5) des Druckgasbehälters (1) und der Innenwand des Zwischengehäuses (4) ausgebildet und von der Verschlußscheibe (3) in axialer Richtung begrenzt ist.

6. Vorrichtung nach Anspruch 5, **dadurch gekennzeichnet, daß** der Abströmraum (9) im Zwischengehäuse (4) zwischen der Verschlußscheibe (3) und dem geschlossenen Ende (20) des Rohrteils (17) ausgebildet ist und daß im Rohrteil (17) radial angeordnete Auslaßöffnungen (10) vorgesehen sind.

7. Vorrichtung nach Anspruch 6, **dadurch gekennzeichnet, daß** der Druckraum (6) über radiale Einlaßöffnungen (7, 8) im Rohrteil (17) mit den Aufnahmeräumen (14, 15) für die Treibsätze verbunden ist.

8. Vorrichtung nach Anspruch 7, **dadurch gekennzeichnet, daß** die Einlaßöffnungen (7, 8) für den ersten und zweiten Treibsatz im Rohrteil (17) axial versetzt angeordnet sind, wobei die Einlaßöffnung (7) für den ersten Treibsatz zwischen der Verschlußscheibe (3) und den Einlaßöffnungen (8) für den zweiten Treibsatz in den Druckraum (6) münden.

9. Vorrichtung nach einem der Ansprüche 1 bis 8, **dadurch gekennzeichnet, daß** das Gehäuse (11) für die Treibsätze ein Bodenteil (21), ein Deckelteil (22) und einen zylindrischen Einsatz (23) umfaßt, wobei die genannten Teile (21, 22, 23) alle einen auf den Außendurchmesser des Rohrteils (17) abgestimmten Innendurchmesser aufweisen und zwischen Boden- und Deckelteil (21, 22) zwei voneinander getrennte Aufnahmeräume (14, 15) für die Treibsätze ausgebildet und im Bodenteil (21) Durchgangsbohrungen (31) für die Halterung von Zündungen vorgesehen sind.

10. Vorrichtung nach Anspruch 9, **dadurch gekennzeichnet, daß** im Gehäuse (11) ein radial verlaufender Austrittskanal (12) vorgesehen ist, über den der Aufnahmeraum (14) für den ersten Treibsatz mit der korrespondierenden Einlaßöffnung (7) des Zwischengehäuses (4) und dem Druckraum (6) verbunden ist.

11. Vorrichtung nach Anspruch 10, **dadurch gekennzeichnet, daß** im Gehäuse (11) zwischen dem Bodenteil (21) und dem zylindrischen Einsatz (23) ein zu den Einlaßöffnungen (8) für den zweiten Treibsatz offener, ringförmig umlaufender Kanal (24) ausgebildet ist, der über eine axiale Bohrung (25) mit dem Aufnahmeraum (15) für den zweiten Treibsatz verbunden ist, wobei im umlaufenden Kanal (24) ein ringförmiges Schließteil (26a, 26b) angeordnet ist, durch das die axiale Bohrung (25) verschlossen ist.

12. Vorrichtung nach Anspruch 11, **dadurch gekennzeichnet, daß** das ringförmige Schließteil (26a, 26b) im Querschnitt gesehen L-förmig mit einem radialen Teil (26a) und einem axialen Teil (26b) ausgebildet ist, wobei das radiale Teil (26a) die axiale Bohrung (25) verschließt und das axiale Teil (26b) in einem im zylindrischen Einsatz (23) ausgebildeten, sich axial erstreckenden Ringraum (27) geführt ist.

13. Vorrichtung nach einem der Ansprüche 1 bis 12, **dadurch gekennzeichnet, daß** in den Aufnahmeräumen (14, 15) für die Treibsätze Siebeinsätze (28) zur Rückhaltung fester Verbrennungsprodukte bzw. unverbrannter Treibladungsanteile angeordnet sind.

14. Vorrichtung nach einem der Ansprüche 1 bis 13, **dadurch gekennzeichnet, daß** die Vorrichtung in Verbindung mit einem Kraftfahrzeuglenkrad verwendet wird.

15. Vorrichtung nach Anspruch 14, **dadurch gekennzeichnet, daß** der Druckgasbehälter (1) innerhalb einer Lenksäule angeordnet ist oder selbst die Lenksäule oder einen Teil davon bildet, daß das Zwischengehäuse (4) endseitig mit einem Außengewinde (32) versehen ist und daß das Gehäuse (11) für die Treibsätze mit einer Nabe des Lenkrades verbunden ist bzw. selbst die Nabe des Lenkrades oder einen Teil davon bildet und daß das Gehäuse (11) und das Lenkrad mittels einer auf das Zwischengehäuse (4) aufgeschraubten Mutter (29) mit dem Druckgasbehälter (1) verbunden sind.

16. Vorrichtung nach Anspruch 14 oder 15, **dadurch gekennzeichnet, daß** der Bodenteil (16) im Nabenbereich eines Lenkrades angeordnet ist oder daß der Nabenbereich des Lenkrades den Bodenteil (16) bildet.

## Claims

1. A device for rapid inflation of a gas bag, comprising
- a pressurised gas container (1), the outlet opening (2) of which is closed by a burst disc (3) adapted to be blown off,
- an intermediate housing (4), in which the end (5) of the pressurised gas container (1) at its outlet side is arranged and the interior space of which is divided by the burst disc (3) into a pressure chamber (6) provided with inlet openings (7, 8) for the gaseous combustion products of a propellant charge and an outflow space (9) having outlet openings (10) for a gas mixture for filling the gas bag, and
- a housing (11) for two propellant charges to be arranged separately, which surrounds the intermediate housing (4) and is equipped with conduits (12, 13, 10') correspondingly arranged with respect to the inlet and outlet openings (7, 8, 10) of the intermediate housing (4), through which conduits (12, 13, 10') the gaseous combustion products of the propellant charges can flow into the pressure chamber (6) and, together with the compressed gas, through the outflow space (9) into the gas bag,
**characterised in that** an accommodation space (14) for the first propellant charge is directly connected with the pressure chamber (6) via an open conduit (12) and that the conduit (13), located between the accommodation space (15) for the second propellant charge and the pressure chamber, is closed by a closure element (16), which is movable into an open position by the pressure arising on ignition of the second propellant charge.

2. The device according to claim 1, **characterised in that** the compressed gas container (1) is formed like a tube having a tapered end (5) at the outlet side and a central, axial outlet opening (2) which is closed by the burst disc (3) adapted to be blown off, the diameter of which disc (3) is larger than that of the tapered end (5) on the outlet side of the compressed gas container (1), which end surrounds the outlet opening (2).

3. The device according to claim 2, **characterised in that** the intermediate housing (4) is configured as a tubular part (17) which is closed at one end, the open end (18) of which is placed on a guide portion (19) provided on the compressed gas container (1) and tapered in diameter, and is connected with the compressed gas container (1).

4. The device according to claim 3, **characterised in that** the burst disc (3) has the same diameter as the guide portion (19) of the compressed gas container (1).

5. The device according to any of the claims 1 to 4, **characterised in that** the pressure chamber (6) is formed between the end (5) on the outlet side of the compressed gas container (1) and the inner wall of the intermediate housing (4), which end (5) is further reduced in diameter compared with the guide portion (19), the pressure chamber being delimited in axial direction by the burst disc (3).

6. The device according to claim 5, **characterised in that** the outflow space (9) in the intermediate housing (4) is formed between the burst disc (3) and the closed end (20) of the tubular part (17) and that radially arranged outlet openings (10) are provided in the tubular part (17).

7. The device according to claim 6, **characterised in that** the pressure chamber (6) is connected with the accommodation spaces (14, 15) for the propellant charges via radial inlet openings (7, 8) in the tubular part (17).

8. The device according to claim 7, **characterised in that** the inlet openings (7, 8) for the first and second propellant charges are arranged in the tubular part (17) so as to be axially offset, the inlet opening (7) for the first propellant charge opening into the pressure chamber (6) at a location between the burst disc (3) and the inlet openings (8) for the second propellant charge.

9. The device according to any of the claims 1 to 8, **characterised in that** the housing (11) for the propellant charges comprises a bottom part (21), a cover part (22) and a cylindrical insert (23), said parts (21, 22, 23) each having an internal diameter matching with the outer diameter of the tubular part (17), two separately arranged accommodation spaces (14, 15) for the propellant charges being formed between the bottom part (21) and the cover part (22), and passage holes (31) being provided in the bottom part (21) for mounting igniters.

10. The device according to claim 9, **characterised in that** in the housing (11) a radially extending exit conduit (12) is provided via which the accommodation space (14) for the first propellant charge is connected with the corresponding inlet opening (7) of the intermediate housing (4) and with the pressure chamber (6).

11. The device according to claim 10, **characterised in that** an annularly surrounding conduit (24) is formed in the housing (11) between the bottom part (21) and the cylindrical insert (23), which conduit (24) is open to the inlet openings (8) for the second propellant charge and is connected with the accommodation space (15) for the second propellant charge via an axial bore (25), an annular closure element (26a, 26b) being arranged in the surrounding conduit (24), by means of which closure element (26a, 26b) the axial bore (25) is closed.

12. The device according to claim 11, **characterised in that** the annular closure element (26a, 26b), when viewed in cross-section, is L-shaped with a radial part (26a) and an axial part (26b), the radial part (26a) closing off the axial bore (25) and the axial part (26b) being guided in an axially extending annular space (27) which is formed in the cylindrical insert (23).

13. The device according to any of the claims 1 to 12, **characterised in that** screening inserts (28) are arranged in the accommodation spaces (14, 15) for the propellant charges, for retaining solid combustion products and unburned propellant charge components.

14. The device according to any of the claims 1 to 13, **characterised in that** the device is used in a motor vehicle steering wheel.

15. The device according to claim 14, **characterised in that** the compressed gas container (1) is arranged within a steering wheel column, or constitutes the steering wheel column or a part thereof, that the intermediate housing (4) is provided with an external thread (32) at one end and that the housing (11) for the propellant charges is connected to a hub of the steering wheel or constitutes the hub of the steering wheel or a part thereof, and that the housing (11) and the steering wheel are connected to the compressed gas container (1) by means of a nut (29) screwed on the intermediate housing (4).

16. The device according to claim 14 or 15, **characterised in that** the bottom part (16) is arranged in the hub portion of a steering wheel or that the hub portion of the steering wheel forms the bottom part (16).

## Revendications

1. Dispositif pour gonfler rapidement un sac à gaz, comprenant
- un réservoir de gaz sous pression (1) dont l'orifice de sortie (2) est fermé par un disque d'obturation (3) qui peut être écarté par explosion,
- un carter intermédiaire (4), dans lequel est disposée l'extrémité (5), située du côté de la sortie, du réservoir de gaz sous pression (1) et dont le volume intérieur est subdivisé au moyen du disque d'obturation (3) en une chambre de pression (6) avec des orifices d'entrée (7, 8) pour les produits de combustion se présentant sous la forme gazeuse d'une charge propulsive et en une chambre d'écoulement (9) avec des orifices de sortie (10) pour un mélange de gaz servant à remplir le sac à gaz, et
- un boîtier (11) pour deux charges de propulsion à disposer de façon séparée, boîtier qui entoure le carter intermédiaire (4) et est équipé de canaux (12, 13, 10') disposés de façon à correspondre aux orifices d'entrée et de sortie (7, 8, 10) du carter intermédiaire (4), canaux à travers lesquels les produits de combustion des charges propulsives, se présentant sous la forme gazeuse, peuvent s'écouler dans la chambre de pression (6) et en même temps que le gaz sous pression à travers la chambre d'écoulement (9) dans le sac à gaz,
**caractérisé en ce qu'**une chambre de réception (14) pour la première charge propulsive est directement reliée à la chambre de pression (6) au moyen d'un canal ouvert (12) et **en ce que** le canal (13) est obturé entre la chambre de réception (15) pour la deuxième charge propulsive et la chambre de pression par une pièce de fermeture (16), qui peut être mise, par la pression qui se produit lors de l'allumage de la deuxième charge propulsive, dans une position ouverte.

2. Dispositif selon la revendication 1, **caractérisé en ce que** le réservoir de gaz sous pression (1) est constitué sous une forme tubulaire avec une extrémité (5), située du côté de la sortie, qui va en se rétrécissant, et un orifice central de sortie (2), axial, qui est fermé par le disque d'obturation (3) qui peut se détacher par explosion, et dont le diamètre est plus grand que le diamètre de l'extrémité (5) du réservoir de gaz sous pression (1) qui est située du côté de la sortie, qui entoure l'orifice de sortie (2) et va en se rétrécissant.

3. Dispositif selon la revendication 2, **caractérisé en ce que** le carter intermédiaire (4) est constitué sous la forme d'une pièce tubulaire (17) fermée à une extrémité, dont l'extrémité ouverte (18) est enfilée sur une zone de guidage (19) constituée sur le réservoir de gaz sous pression (1) et dont le diamètre va en se rétrécissant et qui est reliée au réservoir de gaz sous pression (1).

4. Dispositif selon la revendication 3, **caractérisé en ce que** le disque d'obturation (3) a le même diamètre que la zone de guidage (19) du réservoir de gaz sous pression (1).

5. Dispositif selon l'une des revendications 1 à 4, **caractérisé en ce que** la chambre de pression (6) est constituée entre l'extrémité (5) du réservoir de gaz sous pression (1), qui est située du côté de la sortie et dont le diamètre continue à se rétrécir par rapport à la zone de guidage (19), et la paroi intérieure du carter intermédiaire (4) et est limitée par le disque d'obturation (3) dans le sens axial.

6. Dispositif selon la revendication 5, **caractérisé en ce que** la chambre d'écoulement (9) est constituée dans le carter intermédiaire (4) entre le disque d'obturation (3) et l'extrémité fermée (20) de la pièce tubulaire (17), et **en ce que** dans la pièce tubulaire (17) il est prévu des orifices de sortie (10) disposés radialement.

7. Dispositif selon la revendication 6, **caractérisé en ce que** la chambre de pression (6) est reliée par l'intermédiaire d'orifices radiaux d'entrée (7, 8) dans la pièce tubulaire (17) aux chambres de réception (14, 15) pour les charges propulsives.

8. Dispositif selon la revendication 7, **caractérisé en ce que** les orifices d'entrée (7, 8) pour la première et pour la seconde charge propulsive sont disposés de façon axialement décalée dans la pièce tubulaire (17), l'orifice d'entrée (7) pour la première charge propulsive débouchant dans la chambre de pression (6) entre le disque d'obturation (3) et les orifices d'entrée (8) pour la deuxième charge propulsive.

9. Dispositif selon l'une des revendications 1 à 8, **caractérisé en ce que** le boîtier (11) pour les charges propulsives comprend un fond (21), un couvercle (22) et un insert cylindrique (23), les parties (21, 22, 23) mentionnées présentant toutes un diamètre intérieur qui s'adapte au diamètre extérieur de la pièce tubulaire (17) et deux espaces de réception (14, 15), séparés l'un de l'autre, étant constitués pour les charges propulsives entre le fond et le couvercle (21, 22) et des alésages de passage (31) étant prévus dans le fond (21) pour supporter des dispositifs de mise à feu.

10. dispositif selon la revendication 9, **caractérisé en ce que** dans le boîtier (11) il est prévu un canal de sortie s'étendant radialement (12), au moyen duquel la chambre de réception (14) pour la première charge propulsive est reliée à l'orifice d'entrée correspondant (7) du carter intermédiaire (4) et à la chambre sous pression (6).

11. Dispositif selon la revendication 10, **caractérisé en ce que** dans le boîtier (11) il est constitué entre le fond (21) et l'insert cylindrique (23) un canal qui fait tout le tour (24) de forme annulaire, qui est ouvert en direction des orifices d'entrée (8) pour la deuxième charge propulsive, canal (24) qui est relié par un alésage axial (25) à la chambre de réception (15) pour la deuxième charge propulsive, une pièce de fermeture (26a, 26b), de forme annulaire, étant disposée dans le canal qui fait tout le tour (24), pièce par laquelle est obturé l'alésage axial (25).

12. Dispositif selon la revendication 11, **caractérisé en ce que** la pièce de fermeture (26a, 26b) de forme annulaire est constituée, vue en section transversale, en forme de L avec une partie radiale (26a) et une partie axiale (26b), la partie radiale (26a) fermant l'alésage axial (25) et la partie axiale (26b) étant guidée dans un espace annulaire (27), constitué dans l'insert cylindrique (23) et s'étendant axialement.

13. Dispositif selon l'une des revendications 1 à 12, **caractérisé en ce que** dans les chambres de réception (14, 15) pour les charges propulsives sont disposés des inserts de filtration (28) servant à retenir des produits solides de combustion ou des éléments imbrûlés des charges propulsives.

14. Dispositif selon l'une des revendications 1 à 13, **caractérisé en ce que** le dispositif est utilisé en liaison avec un volant de direction de véhicule.

15. Dispositif selon la revendication 14, **caractérisé en ce que** le réservoir de gaz sous pression (1) est agencé à l'intérieur d'une colonne de direction ou forme lui-même la colonne de direction ou une partie de celle-ci, **en ce que** le boîtier intermédiaire (4) est pourvu d'un filetage (32) à son extrémité, **en ce que** le boîtier (11) pour les charges propulsives est relié à un moyeu du volant de direction ou forme lui-même le moyeu du volant de direction ou une partie de celui-ci, et **en ce que** le boîtier (11) et le volant de direction sont reliés au réservoir de gaz sous pression (1) au moyen d'un écrou (29) vissé sur le boîtier intermédiaire (4).

16. Dispositif selon la revendication 14 ou 15, **caractérisé en ce que** la partie de fond (16) est agencée dans la région du moyeu d'un volant de direction ou **en ce que** la région de moyeu du volant de direction forme la partie de fond (16).
